# EUROPÄISCHE PATENTSCHRIFT

(11) **EP 0 855 592 B1**
(45) Veröffentlichungstag und Bekanntmachung des Hinweises auf die Patenterteilung: **12.07.2006**
(21) Anmeldenummer: 97101168.9
(22) Anmeldetag: 25.01.1997
(51) Int. Cl.: G01N 21/17

(54) **Optoakustischer Gassensor**
Optoacoustic gas sensor
Détecteur de gaz optoacoustique

(43) Veröffentlichungstag der Anmeldung: 29.07.1998
(73) Patentinhaber: Siemens Schweiz AG, 8047 Zürich (CH)
(72) Erfinder: Forster, Martin, Dr., 8645 Jona (CH)
(74) Vertreter: Weise, Wolfgang

(56) Entgegenhaltungen:
- EP-A- 0 151 474
- EP-A- 0 685 728
- CH-A- 679 076
- US-A- 4 058 725

## Beschreibung

Die vorliegende Erfindung betrifft einen optoakustischen Gassensor, mit einem Sensorkörper, welcher eine Lichtquelle, eine Messzelle mit einer gaspermeablen Membran und einem Messmikrofon, ein zwischen Lichtquelle und Messzelle angeordnetes optisches Messfilter und eine Auswerteelektronik aufweist.

Die Funktion dieser Gassensoren beruht auf dem fotoakustischen Effekt, bei dem bei Bestrahlung eines zu detektierenden Gases durch moduliertes Licht eine akustische Druckwelle verursacht wird, deren Grösse in direktem Verhältnis zur Konzentration des betreffenden Gases steht. Die akustische Druckwelle entsteht deswegen, weil das Gas die Lichtstrahlung absorbiert und sich dadurch erwärmt. Daraus resultiert eine thermische Ausdehnung und, entsprechend der Modulation der Lichtstrahlung, eine periodische Druckschwankung.

Eine Messung des akustischen Druckes lässt dann auf die Konzentration des zu detektierenden Gases zurückschliessen. Verschiedene Gase werden durch die Verwendung von Lichtquellen verschiedener, den Absorptionslängen der Gase entsprechender, Wellenlängen unterschieden. Es werden dafür Laserquellen oder breitbandige Lichtquellen, wie zum Beispiel Glühwendeln zusammen mit optischen Bandpassfiltern, verwendet. Optoakustischer Gassensorer der eingangs genannten Art sind beispielsweise in der EP-A-0 151 474 und der EP-A-0 760 474 (Dokument, das unter Artikel 54(3) EPÜ fällt) beschrieben. Beim letzteren Gassensor verläuft die Längsachse der Messzelle senkrecht zur Längsachse des Sensorkörpers und die Lichtquelle ist so angeordnet, dass sie die Messzelle bestrahlt und die Membran unbestrahlt bleibt und keine Störsignale verursachen kann. Ausserdem ist der Gassensor explosionssicher, indem die Lichtquelle von der Umgebung dicht abgeschlossen ist. Dieser Sensor hat sich in der Praxis sehr gut bewährt, solange die Konzentration der zu detektierenden Gase oberhalb einer bestimmten Minimalkonzentration liegt, was bei CO₂ praktisch immer der Fall ist.

Dagegen können brennbare Lösungsmittel, die CH-Bindungen enthalten, im Bereich von 300 - 3000 ppm oder NH₃ im Bereich von 100 - 200 ppm mit diesem optoakustischen Sensor kaum detektiert werden. Die Detektion brennbarer Lösungsmittel, welche CH-Bindungen enthalten, wäre eine besonders wichtige Anwendung für optoakustische Gassensoren, weil in dem genannten Bereich von 300 - 3000 ppm Pellistoren nur bedingt einsetzbar sind und zusätzlich leicht vergiften können, und weil Metalloxidsensoren die genannten Konzentrationen zwar detektieren können, aber zu unstabil sind.

Der Grund für die begrenzte Empfindlichkeit der optoakustischen Gassensoren liegt darin, dass Wandeffekte (Nullpunktsignal), Luftdruckschwankungen (verursacht durch das Betätigen von Türen oder von Lüftungsanlagen) und Vibrationen (verursacht durch das Gebäude selbst oder von Motoren oder Personen) Störsignale erzeugen, die die Nachweisgrenze der optoakustischen Gassensoren nach unten beschränken. Die naheliegende Lösung zur Minimierung der genannten Signale würde in der Verwendung grösserer Messzellen und grösserer Lichtquellen liegen, was jedoch zu einer spürbaren Vergrösserung der Abmessungen des Sensorkörpers und zu einer entsprechenden Erhöhung der Kosten des Sensors führen würde.

Durch die Erfindung soll nun ein optoakustischer Gassensor der eingangs genannten Art mit einer deutlich erhöhten Empfindlichkeit angegeben werden.

Diese Aufgabe wird erfindungsgemäss durch die Merkmale des Anspruchs 1 gelöst, wonach der Sensorkörper eine von der Messzelle getrennte Referenzzelle mit einer gaspermeablen Membran und einem Referenzmikrofon aufweist, welches gegen optoakustische Signale des zu messenden Gases abgeschirmt ist, wonach zwischen der Lichtquelle und der Referenzzelle ein optisches Referenzfilter angeordnet ist, welches entweder keine direkte oder nur solche Strahlung der Lichtquelle in die Referenzzelle durchlässt, die von dem zu messenden Gas nicht oder nur sehr wenig absorbiert wird, und wonach in der Auswerteelektronik eine Subtraktion der Signale der beiden Mikrofone erfolgt.

Durch die erfindungsgemässe Lösung werden die durch Vibrationen und die durch Luftdruckschwankungen verursachten Störsignale eliminiert. Die Elimination der ersteren Störsignale erfolgt durch die Verwendung des Referenzmikrofons, das keine optoakustischen Signale des zu messenden Gases empfängt, und die Elimination der letzteren erfolgt durch die räumlich getrennte Referenzzelle mit dem Referenzmikrofon.

Durch die Verwendung eines solchen Referenzfilters ist gewährleistet, dass in der Referenzzelle keine optoakustischen Signale des zu detektierenden Gases entstehen, so dass das Referenzmikrofon auch keine derartigen Signale empfangen kann. Ausserdem werden durch das Referenzfilter auch die durch Wandeffekte verursachten Nullpunktsignale die hauptsächlich von der modulierten Erwärmung des zwischen Lichtquelle und Messzelle angeordneten optischen Filters stammen, eliminiert.

Ein optoakustischer Gassensor mit Mess- und Referenzzelle ist aus der US-A-4 058 725 bekannt, wobei aber bei diesem Sensor die Referenzzelle gegenüber der Umgebung abgeschlossen ist, so dass durch Druckschwankungen verursachte Störsignale nicht eliminiert werden können.

In Springer Series in Optical Sciences, Vol. 62, Photoacustic and Photothermal Phenomena II, S. 369, wird von O. Oehler und H. Blum ein optoakustischer Sensor mit zwei Messzellen, zwei Lichtquellen, zwei optischen Filtern und einem zwischen den Messzellen eingebauten symmetrischen Mikrofon beschrieben, dessen Membran mit dem Gasvolumen der beiden Messzellen in Verbindung steht. Beide Messzellen erhalten gepulstes Licht mit derselben Frequenz, die beiden Lichtintensitäten sind aber gegeneinander um 180° phasenverschoben. Die beiden Zellen sind über Ventile mit einer Probenkammer verbunden, in der sich ein Baumblatt befindet, dessen Gasaktivitäten gemessen werden sollen. Die Luft im ganzen System wird umgepumpt und zwischen den Pumpstössen wird jeweils gemessen.

Der in diesem Artikel beschriebene optoakustische Gassensor, mit zwei Messzellen und einem Mikrofon kann die gestellte Aufgabe nicht lösen, weil einerseits mechanische Vibrationen, die auf die Membran des Mikrofons übertragen werden, nicht kompensiert werden können und daher Störsignale verursachen, und weil andererseits durch Wandeffekte verursachte Nullpunktsignale ebenfalls nicht kompensiert werden können. Ausserdem ist dieser Gassensor relativ schwierig herzustellen und teuer.

Im folgenden wird die Erfindung anhand eines Ausführungsbeispiels und der Zeichnungen näher erläutert; es zeigt:
Fig. 1 eine Explosionsdarstellung eines erfindungsgemässen Gassensors,
Fig. 2 einen schematischen Achsialschnitt durch den Gassensor von Fig. 1; und
Fig. 3 ein Blockschaltbild des Gassensors von Fig. 1.

Der Gassensor besteht darstellungsgemäss aus zwei identischen, halbrunden Gehäusehälften 1 und 2 aus Aluminium-Spritzguss oder einem anderen geeigneten Material, die zusammengesetzt einen zylindrischen Sensorkörper bilden, aus einer Leiterplatte 3 und aus zwei Sicherungsringen 4 und 5. Jede der beiden Gehäusehälften 1 und 2 enthält eine zylindrische Kammer, wobei die Kammer der einen Gehäusehälfte 1 als Messzelle 6 und die Kammer der anderen Gehäusehälfte 2 als Referenzzelle 7 dient, und eine der Mess- und der Referenzzelle 6 bzw. 7 vorgelagerte Kammer 8 bzw. 9 die zur Aufnahme einer der Mess- und der Referenzzelle 6 bzw. 7 gemeinsamen Lichtquelle 10 vorgesehen ist. Messzelle 6 und Referenzzelle 7 sind gegen die Lichtquelle 10 hin je durch ein optisches Messfilter 11 bzw. Referenzfilter 12 abgeschlossen. Die Lichtquelle 10 ist vorzugsweise so angeordnet, dass ihre Glühwendel auf der Verlängerung der Längsachsen der beiden zylindrischen Kammern, Messzelle 6 und Referenzzelle 7, liegt.

An ihrer Bodenfläche weisen die Mess- und die Referenzzelle 6 bzw. 7 je eine Bohrung zum Durchtritt eines Messmikrofons 13 bzw. eines Referenzmikrofons 14 auf Die oberen Stirnflächen der beiden Gehäusehälften 1 und 2 weisen je eine bis zur Mess- bzw. Referenzzelle 6, 7 durchgehende Öffnung auf, in die je eine gaspermeable Membran 15 und im Anschluss an diese ein Lochgitter 16 eingesetzt sind. Die Membran 15, die für Gas durchlässig und für Wassertröpfchen undurchlässig ist, besteht aus einem engmaschigen Material mit Öffnungen in der Grössenordnung von Nanometern. Die Lochgitter 16 dienen als Träger für die Membranen 15 und verhindern ausserdem eine direkte Bestrahlung der Membranen durch die Lichtquelle 10. Messmikrofon 13, Referenzmikrofon 14 und Lichtquelle 10 sind auf der Leiterplatte 3 montiert, die ausserdem noch eine Fotodiode 17 zur Überwachung der Intensität des von der Lichtquelle 10 ausgesandten Lichts trägt.

Im Boden der Kammern 8 und 9 sind Bohrungen 18 und 19 zum Durchtritt der Lichtquelle 10 und der Fotodiode 17 vorgesehen, wobei die Bohrung 18 für die Lichtquelle 10 an der Trennfläche zwischen den beiden Gehäusehälften 1, 2 angeordnet ist, so dass die Lichtquelle 10 je zur Hälfte in einer der Gehäusehälften 1, 2 liegt. Die Bohrung 19 für die Fotodiode 17 ist darstellungsgemäss im Boden der Kammer 8 vorgesehen, sie könnte aber ebenso wie die Bohrung 18 je zur Hälfte in jeder Kammer liegen. In jedem Fall wird man, damit beide Gehäusehälften 1 und 2 identisch sind und für deren Herstellung nur eine Gussform erforderlich ist, auch die Kammer 9 mit dieser Bohrung versehen. Die beiden Gehäusehälften 1 und 2 sind an ihren planen Seitenflächen mit Bolzen und zugeordneten Löchern versehen, die zur Führung und Justierung dienen. Im betriebsbereiten Zustand des Sensors sind das Mess- und das Referenzfilter 11, 12 in die entsprechende Sensorhälfte 1 bzw. 2 eingeklebt, die Sensorhälften 1 und 2 sind an ihren planen Seitenflächen zusammengesteckt, mit den Ringen 4 und 5 fixiert und fest verbunden, vorzugsweise verklebt oder verleimt und die Leiterplatte 3 ist mit dem Sensorkörper vergossen. Die Mess- und die Referenzzelle 6 bzw. 7 und das Mess- und das Referenzmikrofon 13 bzw. 14 sind identisch.

Die Leiterplatte 3 ist mit einer nicht dargestellten weiteren Leiterplatte verbunden, die eine Treiber- und Auswerteelektronik enthält. Die Lichtquelle 10 ist eine herkömmliche Lampe mit einer Glühwendel oder eine Laserquelle. Die Fotodiode 17 besteht aus einer Siliziumzelle und einem Tageslichtfilter. Bei Verwendung einer Lampe mit Glühwendel als Lichtquelle 10, misst die Fotodiode 17 die Lichtintensität in einem Wellenlängenbereich um vorzugsweise 900 nm. Die Glühwendel emittiert Licht über einen breites Spektrum bis in den Infrarotbereich, und in den meisten Fällen wird für die Gasdetektion eine Spektrallinie im Infrarotbereich verwendet. Man geht jedoch davon aus, dass eine Kontrollmessung der Lichtintensität bei 900 nm für die Überwachung der Lichtintensität im Infrarotbereich genügend aussagekräftig und zuverlässig ist. Wenn die Lichtquelle 10 bevorzugt im Bereich des langwelligen Infrarot strahlt, kann anstelle der Siliziumfotodiode 17 auch ein Infrarotsensor verwendet werden.

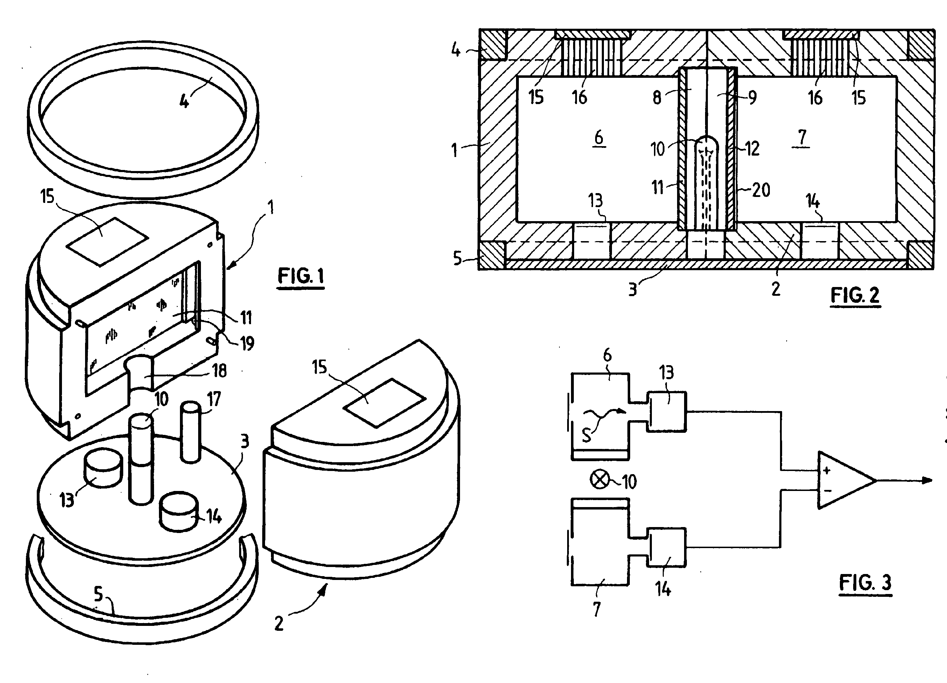

Die Treiberelektronik veranlasst die Lichtquelle 10, in einem Arbeitszyklus von 1:3 ein- und auszuschalten, wobei ein Schaltzyklus ungefähr 1/10 Sekunde dauert. Die Erwärmung der Glühwendel beim Einschalten der Lichtquelle 10 erfolgt in der Regel schneller als die Abkühlung beim Ausschalten, so dass der Arbeitszyklus von 1:3 eine ausreichende Abkühlung der Glühwendel nach dem Ausschalten sicherstellt. Die Ausgangssignale des Messmikrofons 13 und des Referenzmikrofons 14 werden der Auswerteelektronik zugeleitet, wo eine Subtraktion der beiden Signale erfolgt (Fig. 3). Das Ergebnis dieser Subtraktion wird verstärkt und durch phasenempfindliche Gleichrichtung in eine Gleichspannung umgewandelt. Die Ermittlung des Gaskonzentrationswerts erfolgt durch einen Vergleich des Spannungssignals mit gespeicherten Eichwerten, denen Gaskonzentrationswerte zugeordnet sind.

Das Mess- und das Referenzfilter 11 bzw. 12 wirken als optische Bandpassfilter mit einem für das zu detektierende Gas charakteristischen charakteristischen Durchlassbereich in Form eines schmalen Spektralbandes. Für den Nachweis von CO₂ liegt dieses Spektralband um 4.25 µm, für den Nachweis von NH₃ um 10 µm. Die Filter 11 und 12 sind mit einem das sichtbare Licht absorbierenden Klebstoff in ihre Gehäusehälfte 1 bzw. 2 eingeklebt, wobei die Absorption des sichtbaren Lichts die Beleuchtung der Mess- und der Referenzzelle 6 bzw. 7 mit unerwünschten Wellenlängen verhindert. Durch die Absorption des sichtbaren Lichts erwärmen sich der Klebstoff und die Filter 11 und 12. Dadurch wird ein akustisches Signal verursacht, das zur Funktionskontrolle der Mikrofone 13, 14, der Lichtquelle 10 und der Fotodiode 17 verwendet wird. Denn sobald dieses Signal verschwindet, ist mindestens eine der genannten Komponenten nicht mehr funktionstüchtig. Die für diese Funktionskontrolle dienenden Schaltungen sind nicht dargestellt.

Im Betriebszustand des Gassensors wird das in der Messzelle anwesende Gas durch moduliertes Licht der Lichtquelle 10 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht. Die gesuchte Konzentration wird durch Messung des akustischen Druckes ermittelt.

Die Abhängigkeit des Messignals von den Dimensionen und weiteren Eigenschaften der Messzelle 6 und die Bestimmung der Eichkurve sind in der eingangs genannten europäischen Patentanmeldung Nr. 95 113 854.4 ausführlich beschrieben und werden hier nicht weiter erläutert. Es wird in diesem Zusammenhang auf die genannte europäische Patentanmeldung verwiesen.

Wenn keine Referenzzelle 7 und kein Referenzmikrofon 14 vorgesehen sind, dann sind dem Messignal des betreffenden Gassensors Störsignale überlagert, die die Nachweisgrenze des Sensors nach unten begrenzen. Die Störsignale sind im wesentlichen durch Wandeffekte, Luftdruckschwankungen und Vibrationen verursacht.

Die durch Vibrationen verursachten Störsignale werden dadurch eliminiert, dass parallel zum Messmikrofon 13 ein zweites identisches Mikrofon (Referenzmikrofon 14), das keine optoakustischen Signale S (Fig. 3) des nachzuweisenden Gases empfängt, als Referenz verwendet wird, und die Signale der beiden Mikrofone subtrahiert werden. Die durch Luftdruckschwankungen (Lüftungsanlagen, Öffnen und Schliessen von Türen und Fenstern) verursachten Störsignale werden dadurch eliminiert, dass parallel zur Messzelle 6 eine Referenzzelle 7 verwendet und das Referenzmikrofon 14 in dieser Referenzzelle angeordnet wird. Dann sind die Störsignale sowohl im Signal der Messzelle als auch im Signal der Referenzzelle enthalten, und beeinflussen das durch Subtraktion dieser beiden Signale gewonnene Messignal nicht. Das Referenzmikrofon 14 in der Referenzzelle 7 darf keine optoakustischen Signale S des nachzuweisenden Gases empfangen, damit die durch Vibrationen verursachten Signale ebenfalls eliminiert werden. Diese Bedingung ist am einfachsten dadurch zu erfüllen, dass in der Referenzzelle 7 keine Bestrahlung des darin enthaltenen Gases mit moduliertem Licht erfolgt oder dass die in die Referenzzelle 7 gelangende Strahlung vom nachzuweisenden Gas nicht oder nur sehr wenig absorbiert wird.

Durch Wandeffekte werden sogenannte Nullpunktsignale verursacht, was hauptsächlich von der modulierten Erwärmung des Messfilters 11 herrührt. Diese Wandeffekte werden dadurch eliminiert, dass in der Referenzzelle 7 ein von einer identischen Lichtquelle bestrahltes Referenzfilter 12 angeordnet wird, welches sich ebenfalls moduliert erwärmt. Vorzugsweise wird, so wie in den Fig. 1 und 2 dargestellt, für Mess- und Referenzzelle 6 bzw. 7 eine gemeinsame Lichtquelle 10 verwendet.

Bei Verwendung eines Referenzfilters 12 muss allerdings dafür Sorge getragen werden, dass das Referenzfilter keine direkte Strahlung der identischen Lichtquelle, die vom nachzuweisenden Gas absorbiert werden könnte, in die Referenzzelle 7 durchlässt. Diese Bedingung wird einerseits dadurch erfüllt, dass das aus einem im Sichtbaren mindestens teilweise absorbierenden Material (z.B. Silizium, geschwärztes Polyäthylen und dergleichen) bestehende Referenzfilter 12 an seiner der Referenzzelle 7 zugewandten Seite mit einer Spiegelschicht 20 (Fig. 2) versehen wird, wodurch das Referenzfilter folgende Eigenschaften aufweist:
- Das Referenzfilter 12 wird durch Absorption des sichtbaren Anteils der Strahlung der Lichtquelle 10 etwa gleich warm wie das Messfilter 11.
- An der Spiegelschicht 20 wird die nicht absorbierte Infrarotstrahlung in die Messzelle 6 reflektiert, wodurch sich das Nutzsignal erhöht.
- Es gelangt keine direkte Infrarotstrahlung der Lichtquelle 10 in die Referenzzelle 7.

Andererseits kann das Referenzfilter 12 aber auch ohne Spiegelschicht 20 ausgebildet sein und Infrarotstrahlung in die Referenzzelle 7 eindringen lassen. In diesem Fall muss dafür gesorgt werden, dass die in die Referenzzelle 7 eindringende Infrarotstrahlung entweder eine andere Wellenlänge aufweist als die in die Messzelle 6 eindringende Infrarotstrahlung oder vom nachzuweisenden Gas nur sehr wenig absorbiert wird.

Zum Zusammenbau des Gassensors werden das Mess- und das Referenzfilter 11 bzw. 12 in die jeweilige Gehäusehälfte 1 bzw. 2 eingeleimt, und die Leiterplatte 3 wird mit den erforderlichen Komponenten Lichtquelle 10, Messmilcrofon 13, Referenzmikrofon 14 und Fotodiode 17, bestückt. Dann werden die beiden Gehäusehälften 1 und 2 zusammengeleimt und durch Überstreifen der Ringe 4 und 5 gesichert, und schliesslich wird die Leiterplatte 3 mit dem Sensorkörper vergossen.

## Patentansprüche

1. Optoakustischer Gassensor mit einem Sensorkörper, welcher eine Lichtquelle (10), eine Messzelle (6) mit einer gaspermeablen Membran (15) und einem Messmikrofon (13), ein zwischen Lichtquelle (10) und Messzelle (6) angeordnetes optisches Messfilter (11) und eine Auswerteelektronik aufweist, **dadurch gekennzeichnet, dass** der Sensorkörper eine von der Messzelle (6) getrennte Referenzzelle (7) mit einer gaspermeablen Membran (15) und einem Referenzmikrofon (14) aufweist, welches gegenüber optoakustischen Signalen des nachzuweisenden Gases abgeschirmt ist, dass zwischen der Lichtquelle (10) und der Referenzzelle (7) ein optisches Referenzfilter (12) angeordnet ist, welches entweder keine direkte oder nur solche Strahlung der Lichtquelle (10) in die Referenzzelle (7) durchlässt, die von dem zu messenden Gas nicht oder nur sehr wenig absorbiert wird, und dass in der Auswerteelektronik eine Subtraktion der Signale der beiden Mikrofone (13, 14) erfolgt.

2. Gassensor nach Anspruch 1, **dadurch gekennzeichnet, dass** das Referenzfilter (12) aus einem für Infrarotstrahlung transparenten, im Sichtbaren aber zumindest teilweise absorbierenden Material besteht und an seiner der Referenzzelle (7) zugewandten Seite mit einem Spiegelbelag (20) versehen ist.

3. Gassensor nach Anspruch 1, **dadurch gekennzeichnet, dass** zwischen der Lichtquelle (10) und der Referenzzelle (7) ein optisches Referenzfilter (12) angeordnet ist, welches in die Referenzzelle (7) nur solche Strahlung der Lichtquelle (10) durchlässt, die eine andere Wellenlänge als die in die Messzelle (6) gelangende Strahlung aufweist, und die von dem zu messenden Gas nicht oder nur sehr wenig absorbiert wird.

4. Gassensor nach einem der Ansprüche 1 bis 3, **dadurch gekennzeichnet, dass** der Sensorkörper aus zwei identischen Gehäusehälften (1, 2) besteht, von denen die eine (1) die Messzelle (6) mit dem Messmikrofon (13) und das Messfilter (11) und die andere die Referenzzelle (7) mit dem Referenzanikrofon (14) und das Referenzfilter (12) enthält.

5. Gassensor nach Anspruch 4, **dadurch gekennzeichnet, dass** die Lichtquelle (10) so angeordnet ist, dass sie je zur Hälfte in den beiden Gehäusehälften (1, 2) liegt.

6. Gassensor nach einem der Ansprüche 1 bis 5, **dadurch gekennzeichnet, dass** das Messfilter (11) und das Referenzfilter (12) mit einem das sichtbare Licht absorbierenden Klebstoff in ihre Gehäusehälfte (1 bzw. 2) eingeklebt sind.

## Claims

1. Optoacoustic gas sensor having a sensor body that comprises a light source (10), a measuring cell (6) having a gas-permeable membrane (15) and a measuring microphone (13), an optical measuring filter (11) arranged between light source (10) and measuring cell (6), and electronic analysis circuitry **characterized in that** the sensor body comprises a reference cell (7), separate from the measuring cell (6), having a gas-permeable membrane (15) and a reference microphone (14) that is screened from optoacoustic signals from the gas to be detected, **in that** an optical reference filter (12) is arranged between the light source (10) and the reference cell (7), said reference filter allowing through into the reference cell (7) either no direct radiation or only such radiation from the light source (10) that is not absorbed, or only very slightly, by the gas to be measured, and **in that** the signals from the two microphones (13, 14) are subtracted in the electronic analysis circuitry.

2. Gas sensor according to Claim 1, **characterized in that** the reference filter (12) is made of a material transparent to infrared radiation but at least partially absorptive in the visible, and is provided with a reflective layer (20) on its side facing the reference cell (7).

3. Gas sensor according to Claim 1, **characterized in that** an optical reference filter (12) is arranged between the light source (10) and the reference cell (7), said reference filter allowing through into the reference cell (7) only such radiation from the light source (10) that has a different wavelength from the radiation reaching the measuring cell (6), and that is not absorbed, or only very slightly, by the gas to be measured.

4. Gas sensor according to one of the Claims 1 to 3, **characterized in that** the sensor body comprises two identical case halves (1, 2), of which the one (1) contains the measuring cell (6) having the measuring microphone (13) and the measuring filter (11), and the other contains the reference cell (7) having the reference microphone (14) and the reference filter (12).

5. Gas sensor according to Claim 4, **characterized in that** the light source (10) is arranged so that each half of it lies in the two case halves (1, 2).

6. Gas sensor according to one of the Claims 1 to 5, **characterized in that** the measuring filter (11) and the reference filter (12) are glued into their case half (1 and 2 respectively) by an adhesive that absorbs visible light.

## Revendications

1. Capteur de gaz opto-acoustique comprenant un corps de capteur, lequel présente une source de lumière (10), une cellule de mesure (6) avec une membrane (15) perméable au gaz et un microphone de mesure (13), un filtre de mesure (11) optique disposé entre la source de lumière (10) et la cellule de mesure (6) et un dispositif électronique d'évaluation, **caractérisé en ce que** le corps de capteur présente une cellule de référence (7) séparée de la cellule de mesure (6) avec une membrane (15) perméable au gaz et un microphone de référence (14), lequel est protégé par rapport à des signaux opto-acoustiques du gaz à déceler, **en ce qu'**entre la source de lumière (10) et la cellule de référence (7) est disposé un filtre optique de référence (12), lequel ne transmet aucun rayonnement direct ou uniquement ce rayonnement de la source de lumière (10) dans la cellule de référence (7), qui n'est pas absorbé ou seulement très peu par le gaz à mesurer, et **en ce que** dans le dispositif électronique d'évaluation se produit une soustraction des signaux des deux microphones (13, 14).

2. Capteur de gaz selon la revendication 1, **caractérisé en ce que** le filtre de référence (12) se compose d'une matière transparente pour un rayonnement infrarouge, mais partiellement absorbante au spectre visible et est doté sur son côté orienté vers la cellule de référence (7) d'un revêtement miroir (20).

3. Capteur de gaz selon la revendication 1, **caractérisé en ce qu'**entre la source de lumière (10) et la cellule de référence (7) est disposé un filtre optique de référence, lequel ne transmet dans la cellule de référence (7) uniquement ce rayonnement de la source de lumière (10), qui présente une autre longueur d'onde que le rayonnement parvenant dans la cellule de mesure (6), et qui n'est pas absorbé ou seulement très peu par le gaz à mesurer.

4. Capteur de gaz selon l'une des revendications 1 à 3, **caractérisé en ce que** le corps de capteur se compose de deux moitiés de boîtier identiques (1, 2) dont l'une (1) contient la cellule de mesure (6) avec le microphone de mesure (13) et le filtre de mesure (11) et l'autre la cellule de référence (7) avec le microphone de référence (14) et le filtre de référence (12).

5. Capteur de gaz selon la revendication 4, **caractérisé en ce que** la source de lumière (10) est disposée de manière telle qu'elle se trouve à chaque fois à moitié dans les deux moitiés de boîtier (1, 2).

6. Capteur de gaz selon l'une des revendications 1 à 5, **caractérisé en ce que** le filtre de mesure (11) et le filtre de référence (12) sont collés avec une colle absorbant la lumière visible dans leur moitié de boîtier (1 resp. 2).
